# EUROPEAN PATENT SPECIFICATION

(11) **EP 4 009 766 B1**
(45) Date of publication and mention of the grant of the patent: **02.10.2024**
(21) Application number: 20719622.1
(22) Date of filing: 16.04.2020
(51) Int. Cl.: A01D 41/16

(54) **FEEDERHOUSE ASSEMBLIES, AGRICULTURAL HARVESTERS, AND METHODS OF CONNECTING HARVESTING HEADERS TO AGRICULTURAL HARVESTERS**
EINZUGSGEHÄUSE, LANDWIRTSCHAFTLICHE ERNTEMASCHINE, UND VERFAHREN ZUM KOPPELN EINES ERTEVORSATZES AN EINE LANDWIRTSCHAFTLICHE ERNTEMASCHINE
CHAMRE D'ALIMENTATION, MACHINE AGRICOLE DE RÉCOLTE, ET MÉTHODE POUR CONNECTER UNE TÊTE DE RÉCOLTE À UNE MASCHINE AGRICOLE DE RÉCOLTE

(30) Priority: 05.08.2019 US 201962882749 P
(43) Date of publication of application: 15.06.2022
(73) Proprietor: AGCO International GmbH, 8212 Neuhausen am Rheinfall (CH)
(72) Inventor: RACCHELLA, Fabio, 36042 Breganze (IT)
(74) Representative: AGCO Intellectual Property Department
(86) International application number: PCT/EP2020/060693
(87) International publication number: WO 2021/023402

(56) References cited:
- EP-A1- 2 574 229
- EP-A1- 2 574 229
- AU-B2- 2010 241 336
- AU-B2- 2010 241 336
- FR-A- 1 469 733
- FR-A- 1 469 733
- US-A1- 2017 311 545
- US-A1- 2017 311 545

## Description

### FIELD

This disclosure relates to self-propelled crop harvesting machines capable of supporting a harvesting header on the front end thereof, and particularly to a feederhouse that facilitates attachment of a harvesting header to the machine.

### BACKGROUND

Self-propelled agricultural harvesters are well known and include, by way of example, combine harvesters, windrowers, and forage harvesters, all of which typically include a frame or chassis, an operator cab, an engine, and ground-engaging wheels or tracks. A cutting or pick-up header is often carried by the harvester, the header typically being considerably wider than the harvester and mounted to the front side of a feederhouse.

Crop material collected by the header is conveyed into the feederhouse before being conveyed in a generally rearward direction to crop-processing apparatus. In the case of a combine harvester, the processing apparatus serves to thresh the crop material and separate grain therefrom, whereas, in the case of a forage harvester or windrower the crop material is typically passed through conditioning rollers.

The height of the header is typically adjusted by raising and lowering the feeder house around a lateral feederhouse pivot axis. To permit pitch adjustment of the header with respect to the feeder house, a header-interface frame is often pivotally mounted to the feeder house over the front opening thereof to permit pitch adjustment around a transverse pitch-adjustment axis. A hydraulic cylinder controls adjustment of the lateral tilt.

EP 2 574 229 A1 (Deere & Co) discloses a feederhouse assembly for an agricultural harvester having the features of the precharacterising portion of claim 1.

### BRIEF SUMMARY

The invention relates to a feederhouse assembly according to claim 1 and to an agricultural harvester according to claim 16.

The invention further relates to a method of connecting a harvesting header to an agricultural harvester according to claim 12. The invention relates further to a non-transitory computer-readable storage medium according to claim 17. Preferred embodiments are disclosed in the dependent claims.

### BRIEF DESCRIPTION OF THE DRAWINGS

While the specification concludes with claims particularly pointing out and distinctly claiming what are regarded as embodiments of the present disclosure, various features and advantages of embodiments of the disclosure may be more readily ascertained from the following description of example embodiments of the disclosure when read in conjunction with the accompanying drawings, in which:
FIG. 1 is a simplified front perspective view of an example agricultural harvester;
FIG. 2 illustrates a feederhouse assembly having a yaw frame, which may be a part of the agricultural harvester shown in FIG. 1;
FIG. 3 is a simplified schematic diagram of a header yaw control system for the feederhouse assembly of FIG. 2;
FIG. 4 is a simplified schematic diagram of another header yaw control system that may be used with the feederhouse assembly of FIG. 2;
FIG. 5A is a simplified top view of an agricultural harvester approaching a harvesting header;
FIG. 5B is a simplified top view of the agricultural harvester connected to the harvesting header;
FIG. 5C is a simplified top view of the agricultural harvester connected to the harvesting header after the harvesting header has been moved to a harvesting position;
FIG. 6 is a simplified flow chart illustrating an example method of connecting a harvesting header to an agricultural harvester; and
FIG. 7 illustrates an example computer-readable storage medium comprising processor-executable instructions configured to embody a method of connecting a harvesting header to an agricultural harvester, such as the method illustrated in FIG. 6.

### DETAILED DESCRIPTION

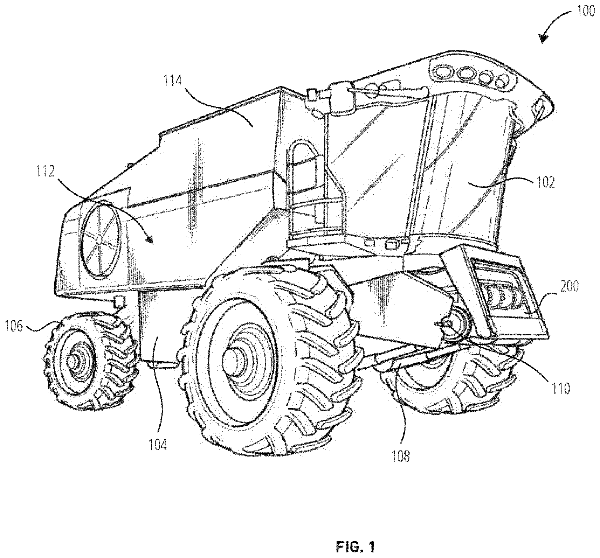

FIG. 1 illustrates an example agricultural harvester embodied as a combine harvester 100. In the context of the present disclosure, the example combine harvester 100 is merely illustrative, and other machines and/or implements with like functionality may deploy certain embodiments disclosed herein, such as windrowers, forage harvesters, *etc.* The example combine harvester 100 is shown in FIG. 1 without a header attached, and includes a feederhouse assembly 200 carried by a chassis 104 supported by wheels 106. An operator cab 102 is mounted to the chassis 104. In some embodiments, other or additional forms of travel may be used, such as tracks. Hydraulic cylinders 108 are shown affixed to the underside of the feederhouse assembly 200 on one end and to the chassis 104 on the other end. The feederhouse assembly 200 may move (*e.g*., up and down, tilt, *etc.*) based on actuation of the hydraulic cylinders 108, which causes a detachably coupled header to also be raised, lowered, and/or tilted. A rotating shaft 110 may be configured to provide mechanical power to a header during operation of the combine harvester 100. The rotating shaft 110 may be configured to operate at various speeds, as described in, for example, U.S. Patent 9,434,252, "Power Takeoff Drive System for a Vehicle," issued September 6, 2016.

In general, the combine harvester 100 cuts crop materials (*e.g*., using the header), wherein the cut crop materials are delivered to the front end of the feederhouse assembly 200. Such crop materials are moved upwardly and rearwardly within and beyond the feederhouse assembly 200 (*e.g*., by a conveyer) until reaching a processing system 112 comprising a thresher rotor. In one embodiment, the thresher rotor may comprise a single, transverse rotor, such as that found in a Gleaner^{®} Super Series Combine by AGCO. Other designs may be used, such as axial-based, twin rotor, or hybrid designs. The thresher rotor processes the crop materials in known manner and passes a portion of the crop material (*e.g.,* heavier chaff, corn stalks, *etc*.) toward the rear of the combine harvester 100 and another portion (*e.g*., grain and possibly light chaff) through a cleaning process in known manner. In the processing system 112, the crop materials undergo threshing and separating operations. In other words, the crop materials are threshed and separated by the thresher rotor operating in cooperation with well-known foraminous processing members in the form of threshing concave assemblies and separator grate assemblies, with the grain (and possibly light chaff) escaping through the concave assemblies and the grate assemblies and to a cleaning system located beneath the processor to facilitate the cleaning of the heavier crop material. Bulkier stalk and leaf materials are generally retained by the concave assemblies and the grate assemblies and are discharged out from the processing system 112 and ultimately out of the rear of the combine harvester 100. The cleaned grain that drops to the bottom of the cleaning system is delivered by a conveying mechanism that transports the grain to an elevator, which conveys the grain to a grain bin 114 located at the top of the combine harvester 100. Any remaining chaff and partially or unthreshed grain is recirculated through the processing system 112 via a tailings return conveying mechanism. Because combine processing is known to those having ordinary skill in the art, further discussion thereof is omitted here for brevity. In embodiments in which the agricultural harvester is a windrower or forage harvester, the processing system 112 may include conditioning rollers, rather than separation devices.

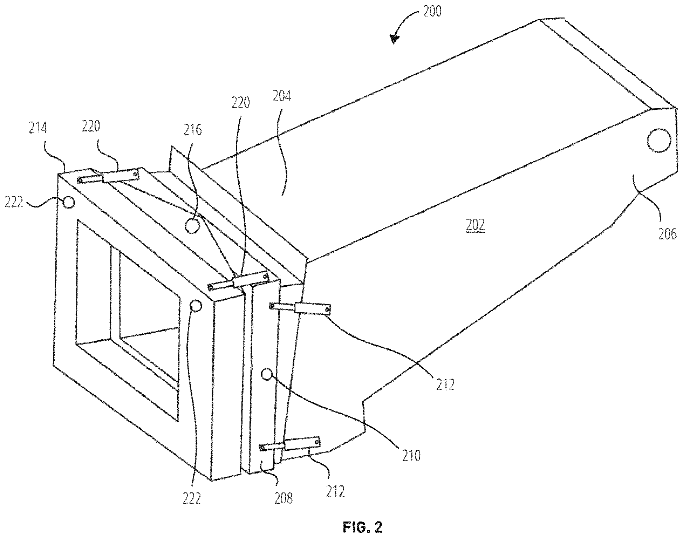

FIG. 2 is a simplified perspective view of the feederhouse assembly 200 of the combine harvester 100 shown in FIG. 1. As shown, a feederhouse 202 has an inlet end 204 and an outlet end 206. Crop material entering the feederhouse assembly 200 from the harvesting header travels from the inlet end 204 toward the outlet end 206 on the way to the processing system 112 (FIG. 1). The harvesting header is coupled to the feederhouse 202 by a yaw frame 214 and a pitch frame 208, which are each adjustable to control the orientation of the harvesting header with respect to the combine harvester 100.

Control of the harvesting header is important to enable a farmer to properly harvest crops. Adjustment of the yaw frame 214 and the pitch frame 208 also facilitates connecting and disconnecting the harvesting header because the yaw frame 214 and the pitch frame 208 can be positioned to match the orientation of the harvesting header.

The pitch frame 208 is adjusted by pivoting about a transverse axis 210. One or more hydraulic cylinders 212 are configured to apply forces on the pitch frame 208 (referred to herein as hydraulic forces, though the forces acting on the pitch frame 208 are due to movement of a piston of the hydraulic cylinders 212, rather than by direct contact of hydraulic fluid on the pitch frame 208). Hydraulic forces are applied to the pitch frame 208 in a direction to rotate the pitch frame 208 upward or downward about the transverse axis 210. Pitch control of a harvesting header is described in more detail in U.S. Patent 10,257,979, "Harvester Header Pitch Adjustment Apparatus," issued April 16, 2019.

The yaw frame 214 is adjusted by pivoting about a vertical axis 216. Though described as "vertical," the vertical axis 216 need not be oriented perfectly vertical. As the pitch frame 208 and the combine harvester 100 move, the orientation of the vertical axis 216 may change. The vertical axis 216 is nonetheless defined as the axis about which the yaw frame 214 pivots. One or more hydraulic cylinders 220 are configured to apply forces (*i.e*., hydraulic forces) on the yaw frame 214. The hydraulic forces are applied to the yaw frame 214 in a direction to rotate the yaw frame 214 left or right about the vertical axis 216.

Two of each of the hydraulic cylinders 212 and the hydraulic cylinders 220 are shown in FIG. 2. Typically, the hydraulic cylinders 212 and the hydraulic cylinders 220 may be single-action hydraulic cylinders, such that each applies a hydraulic force in one direction only. Thus, two of each of hydraulic cylinders 212 and hydraulic cylinders 220 may be necessary to move the yaw frame 214 and/or the pitch frame 208 in opposite directions. In other embodiments, the hydraulic cylinders 212 and/or the hydraulic cylinders 220 may be double-action hydraulic cylinders configured to apply the hydraulic force in two opposing directions, and thus only one of each may be required (*i.e.*, one of hydraulic cylinders 212 and one of hydraulic cylinders 220). In some embodiments, downward motion of the pitch frame 208 may be driven by gravity and the weight of the harvesting header on the pitch frame 208, and thus, only one single-action hydraulic cylinder may be used in place of the hydraulic cylinders 212 acting on the pitch frame 208.

The yaw frame 214 may house one or more transceivers 222, each having an electromagnetic transmitter and an electromagnetic sensor. The transceivers 222 may be configured to provide electromagnetic radiation directed toward the harvesting header. The harvesting header may reflect the electromagnetic radiation, and the transceivers 222 may determine the location and/or orientation of the harvesting header based on the sensed electromagnetic radiation. The electromagnetic radiation may be selected to be, for example, visible laser light or an RF signal (*i.e.*, radio waves). The electromagnetic radiation may enable identification of the location and orientation of the harvesting header when the harvesting header is approximately 1 meter from the transceivers 222. In some embodiments, the yaw frame 214 may carry separate electromagnetic transmitters and electromagnetic sensors.

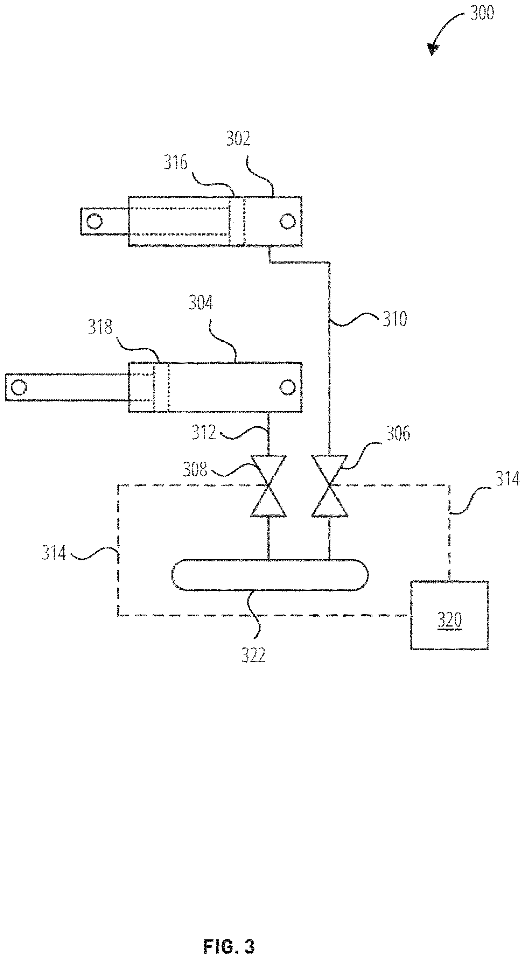

The hydraulic cylinders 220 shown in FIG. 2 may be controlled by a control system 300 as depicted in FIG. 3. In FIG. 3, the hydraulic cylinders 220 are referred to individually as hydraulic cylinder 302 and hydraulic cylinder 304, of which hydraulic cylinder 302 may be on the right of the yaw frame 214, and hydraulic cylinder 304 may be on the left of the yaw frame 214. The hydraulic cylinders 302, 304 each have pistons 316, 318 coupled to the yaw frame 214 and configured to move within the hydraulic cylinders 302, 304. The hydraulic cylinders 302, 304 are controlled by a controller 320 and suitable hydraulic control components as will be known to those skilled in the art.

The control system 300 includes a control valve 306 and a control valve 308 connected to the controller 320 by signal lines 314 (*e.g*., wires). The control valve 306 and control valve 308 modify the pressure of hydraulic fluid in hydraulic lines 310 and 312, respectively. When open, the control valves 306 and 308 permit pressurized fluid from a pressurized fluid source 322 to flow to the hydraulic cylinders 302 and 304, respectively.

For example, to drive the hydraulic cylinders 302, 304 to the position shown in FIG. 3, which corresponds to orientation of the yaw frame 214 (FIG. 2) angled to the right, the control valve 308 may be opened. Pressurized fluid may then flow through the hydraulic line 312 to drive the piston 318 of the hydraulic cylinder 304 outward. The yaw frame 214 pivots about the vertical axis 216 and pushes the piston 316 of the through hydraulic cylinder 302 inward. To drive the hydraulic cylinders 302, 304 in the opposite direction, the control valve 308 may be closed and the control valve 306 may be opened.

The controller 320 may be a part of a control system for the combine harvester 100, and may be located in or near the operator cab 102.

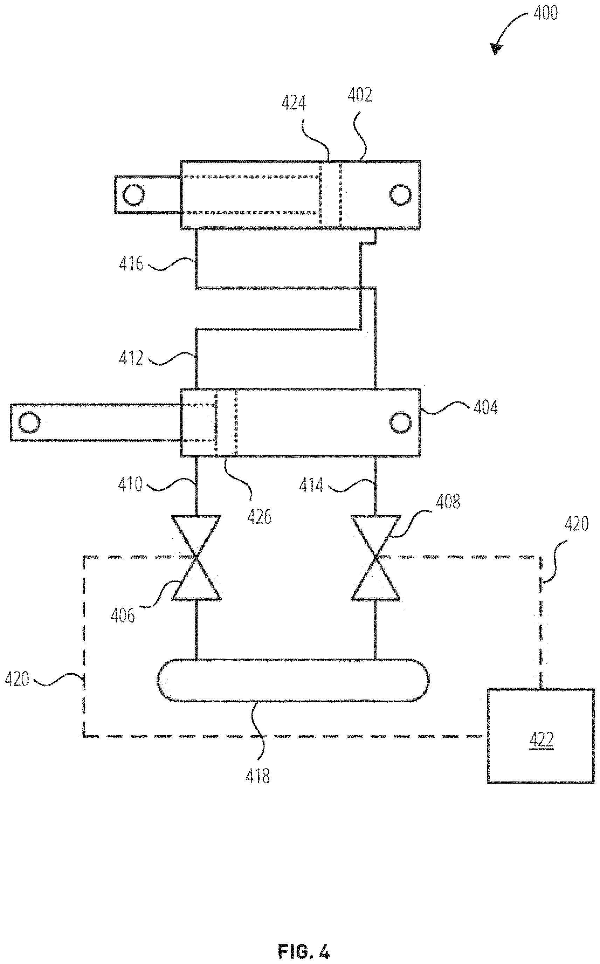

FIG. 4 depicts another control system 400 that may be used to control the hydraulic cylinders 220 shown in FIG. 2. In FIG. 4, the hydraulic cylinders 220 are referred to individually as hydraulic cylinder 402 and hydraulic cylinder 404, of which hydraulic cylinder 402 may be on the right of the yaw frame 214, and hydraulic cylinder 404 may be on the left of the yaw frame 214. The hydraulic cylinders 402, 404 each have pistons 424, 426 coupled to the yaw frame 214 and configured to move within the hydraulic cylinders 402, 404. The hydraulic cylinders 402, 404 are controlled by a controller 422 and suitable hydraulic control components as will be known to those skilled in the art.

The control system 400 may include a control valve 406 and a control valve 408 connected to the controller 422 by signal lines 420 (*e.g*., wires). The control valves 406, 408 modify the pressure of hydraulic fluid in hydraulic lines 410, 412, 416, and 414. When open, the control valves 406, 408 permit pressurized fluid from a pressurized fluid source 418 to flow to the hydraulic cylinders 402, 404.

For example, to drive the hydraulic cylinders 402, 404 to the position shown in FIG. 4, which corresponds to the yaw frame 214 (FIG. 2) oriented to the right, the control valve 408 may be opened. Pressurized fluid may then flow through the hydraulic line 414 to drive the piston 426 of the hydraulic cylinder 404 outward and through the hydraulic line 416 to drive to piston 424 of the hydraulic cylinder 402 inward. To drive the hydraulic cylinders 402, 404 in the opposite direction, the control valve 408 may be closed and the control valve 406 may be opened.

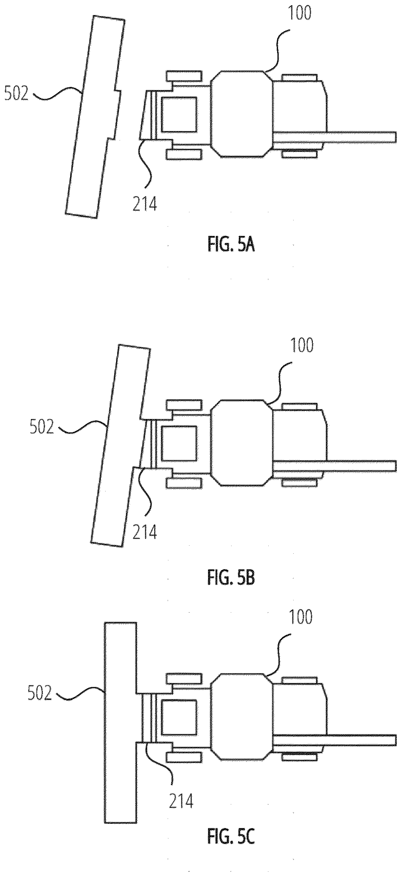

FIGS. 5A through 5C show how a harvesting header 502 may be connected to the combine harvester 100. As the combine harvester 100 approaches the harvesting header 502, the yaw frame 214 may be adjusted such that the yaw frame 214 is parallel to the harvesting header 502, as depicted in FIG. 5A. The combine harvester 100 may then continue forward to couple the harvesting header 502 with the yaw frame 214, as shown in FIG. 5B. Once the harvesting header 502 is connected, the yaw frame 214 may rotate the harvesting header 502 to a selected orientation for harvesting, typically perpendicular to (*i.e.*, at a right angle with) a longitudinal axis parallel to a direction of travel of the combine harvester 100.

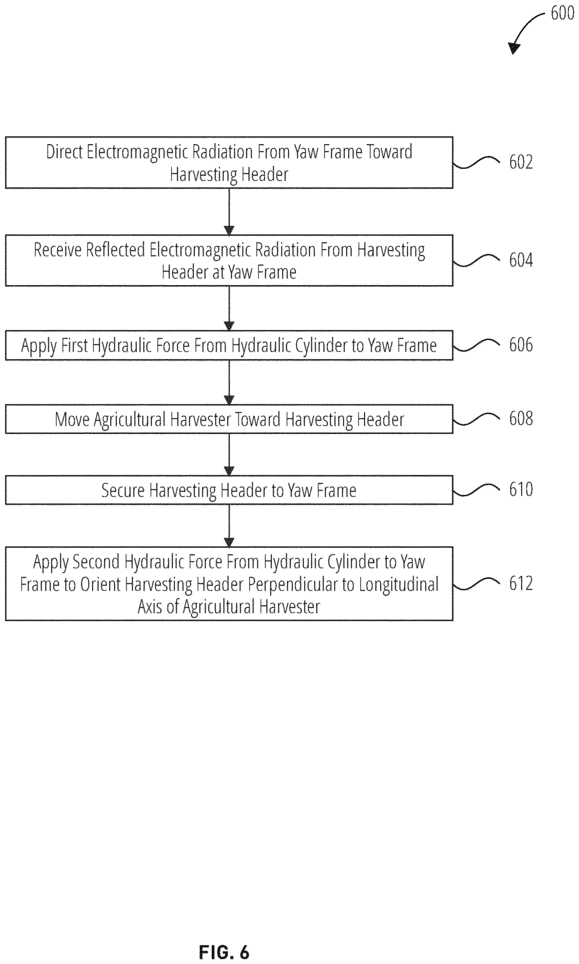

FIG. 6 is a simplified flow chart illustrating a method 600 of connecting a harvesting header to an agricultural harvester, such as the combine harvester 100 shown in FIG. 1 and having a feederhouse assembly 200 as shown in FIG. 2. As shown in block 602, electromagnetic radiation may be directed from a yaw frame adjacent an inlet end of a feederhouse toward the harvesting header.

In block 604, reflected electromagnetic radiation may be received from the harvesting header at the yaw frame. The reflected electromagnetic radiation may be used to determine the orientation of the harvesting header and/or the distance from the yaw frame to the harvesting header. Blocks 602 and 604 are optional, and may occur simultaneously.

In block 606, a first hydraulic force is applied from at least one hydraulic cylinder to the yaw frame to pivot the yaw frame about a vertical axis. The first hydraulic force may be applied by providing a pressurized fluid to the at least one hydraulic cylinder.

In block 608, the agricultural harvester moves toward the harvesting header. Block 606 and block 608 may occur at the same time or may occur in any order.

In block 610, the harvesting header is secured to the yaw frame. For example, a computer may be configured to cause mechanical coupling between the yaw frame and the harvesting header without intervention by any person located proximal to the coupling location because the yaw frame may be aligned with the harvesting header. When the yaw frame is near the harvesting header, sensors may detect the orientation and position of the harvesting header and of the yaw frame (*e.g*., using the radiation optionally received in block 604). The computer may adjust the pressure provided to the hydraulic cylinder(s) to match the orientation of the yaw frame to the orientation of the harvesting header. The computer may then alert an operator to move the agricultural harvester forward until it meets the harvesting header, or may provide a signal to the control system of the agricultural harvester to perform this action automatically. Thus, the harvesting header may be connected without requiring the operator to make any measurements or adjustments at the point of connection. This may increase safety by enabling the operator to remain away from pinch points. Connecting harvesting headers is described in further detail in U.S. Patent 10,034,425, "Automatic Header Coupling," issued July 31, 2018.

In block 612, a second hydraulic force is applied from the at least one hydraulic cylinder to the yaw frame to orient the harvesting header perpendicular to a longitudinal axis of the agricultural harvester. Thus, the agricultural harvester and the harvesting header are ready for harvesting.

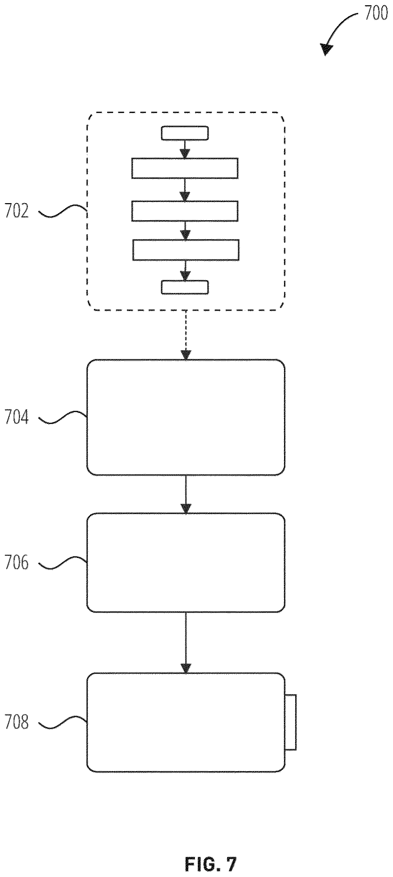

Still other embodiments involve a computer-readable storage medium (*e.g*., a non-transitory computer-readable storage medium) having processor-executable instructions configured to implement one or more of the techniques presented herein. An example computer-readable medium that may be devised is illustrated in FIG. 7, wherein an implementation 700 includes a computer-readable storage medium 702 (*e.g.*, a flash drive, CD-R, DVD-R, application-specific integrated circuit (ASIC), field-programmable gate array (FPGA), a platter of a hard disk drive, *etc.*), on which is computer-readable data 704. This computer-readable data 704 in turn includes a set of processor-executable instructions 706 configured to operate according to one or more of the principles set forth herein. In some embodiments, the processor-executable instructions 706 may be configured to cause a computer to perform operations 708 when executed via a processing unit, such as at least some of the example method 600 depicted in FIG. 6. Many such computer-readable media may be devised by those of ordinary skill in the art that are configured to operate in accordance with one or more of the techniques presented herein.

An advantage of including a yaw control in the feederhouse assembly disclosed herein is that the agricultural harvester can be better aligned with the harvesting header. This may simplify connection of the harvesting header with the agricultural harvester, and may improve safety.

## Claims

1. A feederhouse assembly (200) for an agricultural harvester, the feederhouse assembly (200) comprising:
a feederhouse (202) comprising an inlet end (204);
a yaw frame (214) adjacent the inlet end of the feederhouse (202) and arranged to pivot about a vertical axis (216) relative to the feederhouse (202); and
at least one hydraulic cylinder (220) configured to apply a hydraulic force to rotate the yaw frame (214) about the vertical axis (216) **characterised in that**
the feederhouse assembly (200) further comprises at least one electromagnetic sensor coupled to the yaw frame (214).

2. The feederhouse assembly of claim 1, wherein the at least one hydraulic cylinder (220) comprises a first hydraulic cylinder (302) and a second hydraulic cylinder (304), wherein the first hydraulic cylinder (302) is positioned to apply the hydraulic force in an opposite direction to the second hydraulic cylinder (304).

3. The feederhouse assembly of claim 2, wherein the first hydraulic cylinder (302) and the second hydraulic cylinder (304) each comprise single-action hydraulic cylinders.

4. The feederhouse assembly of claim 1, further comprising a control valve (306,308) configured to modify pressure of a hydraulic fluid in the at least one hydraulic cylinder (220).

5. The feederhouse assembly of claim 4, further comprising a controller (320) configured to operate the control valve (306,308).

6. The feederhouse assembly of claim 1, further comprising at least one electromagnetic transmitter configured to transmit electromagnetic radiation such that, when the yaw frame (214) is in proximity to a harvesting header, the electromagnetic radiation reflects off the harvesting header toward the at least one electromagnetic sensor.

7. The feederhouse assembly of claim 6, wherein the at least one electromagnetic transmitter comprises a laser.

8. The feederhouse assembly of claim 6, wherein the at least one electromagnetic sensor and the at least one electromagnetic transmitter together comprise a transceiver (222).

9. The feederhouse assembly of claim 1, wherein the at least one electromagnetic sensor comprises a first electromagnetic sensor and a second electromagnetic sensor, wherein the first electromagnetic sensor is positioned on an opposite side of the frame from the second electromagnetic sensor.

10. The feederhouse assembly of any one of claim 1 to claim 5, further comprising:
a pitch frame (208) adjacent the inlet end of the feederhouse (202) and arranged to pivot about a transverse axis (210) relative to the feederhouse (202); and
at least one additional hydraulic cylinder (212) configured to apply an additional hydraulic force to rotate the pitch frame (208) about the transverse axis (210).

11. The feederhouse assembly of claim 10, wherein the yaw frame (214) is coupled to the pitch frame (208) at the vertical axis (216), and wherein the pitch frame (208) is coupled to the feederhouse (202) at the transverse axis (210).

12. A method (600) of connecting a harvesting header (502) to an agricultural harverster with a feederhouse assembly of any one of claim 1 to claim 11, the method comprising:
applying (606) a first hydraulic force from at least one hydraulic cylinder (220) to a yaw frame (214) adjacent an inlet end of a feederhouse (202), the first hydraulic force oriented to pivot the yaw frame (214) about a vertical axis (216);
moving (608) the agricultural harvester toward the harvesting header (502);
securing (610) the harvesting header (502) to the yaw frame (214); and
applying (612) a second hydraulic force from the at least one hydraulic cylinder (220) to the yaw frame (214) to orient the harvesting header (502) at a right angle with respect to a longitudinal axis of the agricultural harvester.

13. The method of claim 12, wherein applying the first hydraulic force and applying the second hydraulic force each comprise providing a pressurized fluid to the at least one hydraulic cylinder (220).

14. The method of claim 12, wherein securing the harvesting header (502) to the yaw frame (214) comprises securing the harvesting header (502) to the yaw frame (214) without intervention by any person located proximal to a coupling location thereof.

15. The method of any one of claim 12 to claim 14, further comprising directing electromagnetic radiation from the yaw frame (214) toward the harvesting header (502) and receiving reflected electromagnetic radiation from the harvesting header (502) at the yaw frame (214).

16. An agricultural harvester, comprising:
a chassis (104);
the feederhouse assembly (200) of any one of claim 1 to claim 5 coupled to the chassis (104);
a processing system (112) carried by the chassis (104) and structured to receive crop material from the feederhouse assembly (200); and
a grain bin (114) carried by the chassis (104) and structured to receive grain from the processing system (112).

17. A non-transitory computer-readable storage medium, the computer-readable storage medium (702) including instructions that when executed by a computer, cause the computer to perform the method of any one of claim 12 to claim 14.

## Patentansprüche

1. Fördergehäuseanordnung (200) für eine landwirtschaftliche Erntemaschine, wobei die Fördergehäuseanordnung (200) aufweist:
ein Fördergehäuse (202) mit einem Einlassende (204);
einen Gierrahmen (214), der zu dem Einlassende des Fördergehäuses (202) benachbart ist und
eingerichtet ist, um relativ zu dem Fördergehäuse (202) um eine Vertikalachse (216) zu schwenken; und
mindestens einen Hydraulikzylinder (220), der ausgebildet ist, eine Hydraulikkraft auszuüben, um den Gierrahmen (214) um die Vertikalachse (216) zu drehen, **dadurch gekennzeichnet, dass** die Fördergehäuseanordnung (200) weiterhin mindestens einen elektromagnetischen Sensor aufweist, der mit dem Gierrahmen (214) gekoppelt ist.

2. Fördergehäuseanordnung nach Anspruch 1, **wobei** der mindestens eine Hydraulikzylinder (220) einen ersten Hydraulikzylinder (302) und einen zweiten Hydraulikzylinder (304) aufweist, wobei der erste Hydraulikzylinder (302) angeordnet ist, um die Hydraulikkraft in eine dem zweiten Hydraulikzylinder (304) entgegengesetzte Richtung auszuüben.

3. Fördergehäuseanordnung nach Anspruch 2, **wobei** der erste Hydraulikzylinder (302) und der zweite Hydraulikzylinder (304) jeweils einfach wirkende Hydraulikzylinder aufweisen.

4. Fördergehäuseanordnung nach Anspruch 1, **weiterhin** mit einem Steuerventil (306, 308), das ausgebildet ist, Druck eines Hydraulikfluids in dem mindestens einen Hydraulikzylinder (220) zu modifizieren.

5. Fördergehäuseanordnung nach Anspruch 4, **weiterhin** mit einer Steuerung (320), die ausgebildet ist, das Steuerventil (306, 308) zu betreiben.

6. Fördergehäuseanordnung nach Anspruch 1, **weiterhin** mit mindestens einem elektromagnetischen Sender, der ausgebildet ist, elektromagnetische Strahlung derart auszusenden, dass, wenn der Gierrahmen (214) in der Nähe eines Erntevorsatzes ist, die elektromagnetische Strahlung von dem Erntevorsatz zu dem mindestens einen elektromagnetischen Sensor reflektiert wird.

7. Fördergehäuseanordnung nach Anspruch 6, **wobei** der mindestens eine elektromagnetische Sender einen Laser aufweist.

8. Fördergehäuseanordnung nach Anspruch 6, **wobei** der mindestens eine elektromagnetische Sensor und der mindestens eine elektromagnetische Sender zusammen ein Sende-Empfangsgerät (222) aufweisen.

9. Fördergehäuseanordnung nach Anspruch 1, **wobei** der mindestens eine elektromagnetische Sensor einen ersten elektromagnetischen Sensor und einen zweiten elektromagnetischen Sensor aufweist, wobei der erste elektromagnetische Sensor auf einer dem zweiten elektromagnetischen Sensor gegenüberliegenden Seite des Rahmens angeordnet ist.

10. Fördergehäuseanordnung nach einem der Ansprüche 1 bis 5, **weiterhin** mit:
einem Neigungsrahmen (208), der zu dem Einlassende des Fördergehäuses (202) benachbart ist und eingerichtet ist, um relativ zu dem Fördergehäuse (202) um eine Querachse (210) zu schwenken; und
mindestens einem zusätzlichen Hydraulikzylinder (212), der ausgebildet ist, eine zusätzliche Hydraulikkraft auszuüben, um den Neigungsrahmen (208) um die Querachse (210) zu drehen.

11. Fördergehäuseanordnung nach Anspruch 10, **wobei** der Gierrahmen (214) bei der Vertikalachse (216) mit dem Neigungsrahmen (208) gekoppelt ist, und wobei der Neigungsrahmen (208) bei der Querachse (210) mit dem Fördergehäuse (202) gekoppelt ist.

12. Verfahren (600) zum Verbinden eines Erntevorsatzes (502) mit einer landwirtschaftlichen Erntemaschine mit einer Fördergehäuseanordnung nach einem der Ansprüche 1 bis 11, **wobei** das Verfahren aufweist:
Ausüben (606) einer ersten Hydraulikkraft von mindestens einem Hydraulikzylinder (220) auf einen Gierrahmen (214), der zu einem Einlassende eines Fördergehäuses (202) benachbart ist,
wobei die erste Hydraulikkraft ausgerichtet ist, um den Gierrahmen (214) um eine Vertikalachse (216) zu schwenken;
Bewegen (608) der landwirtschaftlichen Erntemaschine zu einem Erntevorsatz (502);
Sichern (610) des Erntevorsatzes (502) an dem Gierrahmen (214); und
Ausüben (612) einer zweiten Hydraulikkraft von dem mindestens einen Hydraulikzylinder (220) auf den Gierrahmen (214), um den Erntevorsatz (502) gegenüber einer Längsachse der landwirtschaftlichen Erntemaschine in einem rechten Winkel auszurichten.

13. Verfahren nach Anspruch 12, **wobei** das Ausüben der ersten Hydraulikkraft und das Ausüben der zweiten Hydraulikkraft jeweils ein Versorgen des mindestens einen Hydraulikzylinders (220) mit einem unter Druck stehenden Fluid aufweist.

14. Verfahren nach Anspruch 12, **wobei** das Sichern des Erntevorsatzes (502) an dem Gierrahmen (214) ein Sichern des Erntevorsatzes (502) an dem Gierrahmen (214) ohne Intervention durch eine sich proximal zu dem Kupplungsort befindende Person aufweist.

15. Verfahren nach einem der Ansprüche 12 bis 14 **weiterhin** mit Ausrichten einer elektromagnetischen Strahlung von dem Gierrahmen (214) zu einem Erntevorsatz (502) und Empfangen von reflektierter elektromagnetischer Strahlung von dem Erntevorsatz (502) an dem Gierrahmen (214).

16. Landwirtschaftliche Erntemaschine, mit:
einem Chassis (104);
einer Fördergehäuseanordnung (200) nach einem der Ansprüche 1 bis 5, die mit dem Chassis (104) gekoppelt ist;
einem Verarbeitungssystem (112), das von dem Chassis (104) getragen ist und eine Struktur zum Empfangen von Erntegut von der Fördergehäuseanordnung (200) aufweist; und
einem Kornspeicher (114), der von dem Chassis (104) getragen ist und eine Struktur zum Empfangen von Korn von dem Verarbeitungssystem (112) aufweist.

17. Ein nichtflüchtiges computerlesbares Speichermedium, **wobei** das computerlesbare Speichermedium (702) Instruktionen umfasst, die, wenn sie von einem Computer ausgeführt werden, den Computer veranlassen, das Verfahren nach einem Ansprüche 12 bis 14 auszuführen.

## Revendications

1. Ensemble compartiment d'alimentation (200) pour une moissonneuse agricole, l'ensemble compartiment d'alimentation (200) comprenant :
un compartiment d'alimentation (202) comprenant une extrémité d'entrée (204) ;
un cadre en lacet (214) adjacent à l'extrémité d'entrée du compartiment d'alimentation (202) et agencé pour pivoter autour d'un axe vertical (216) par rapport au compartiment d'alimentation (202) ; et
au moins un vérin hydraulique (220) configuré pour appliquer une force hydraulique pour faire tourner le cadre en lacet (214) autour de l'axe vertical (216), **caractérisé en ce que**
l'ensemble compartiment d'alimentation (200) comprend en outre au moins un capteur électromagnétique couplé au cadre en lacet (214).

2. Ensemble compartiment d'alimentation selon la revendication 1, dans lequel l'au moins un vérin hydraulique (220) comprend un premier vérin hydraulique (302) et un second vérin hydraulique (304), dans lequel le premier vérin hydraulique (302) est positionné pour appliquer la force hydraulique dans une direction opposée au second cylindre hydraulique (304).

3. Ensemble compartiment d'alimentation selon la revendication 2, dans lequel le premier vérin hydraulique (302) et le second vérin hydraulique (304) comprennent chacun des vérins hydrauliques à simple action.

4. Ensemble compartiment d'alimentation selon la revendication 1, comprenant en outre une vanne de commande (306, 308) configurée pour modifier la pression d'un fluide hydraulique dans l'au moins un vérin hydraulique (220).

5. Ensemble compartiment d'alimentation selon la revendication 4, comprenant en outre un dispositif de commande (320) configuré pour faire fonctionner la vanne de commande (306, 308).

6. Ensemble compartiment d'alimentation selon la revendication 1, comprenant en outre au moins un transmetteur configuré pour transmettre un rayonnement électromagnétique de sorte que lorsque le cadre en lacet (214) est à proximité d'un bec cueilleur de récolte, le rayonnement électromagnétique réfléchisse le bec cueilleur de récolte vers l'au moins un capteur électromagnétique.

7. Ensemble compartiment d'alimentation selon la revendication 6, dans lequel l'au moins un transmetteur électromagnétique comprend un laser.

8. Ensemble compartiment d'alimentation selon la revendication 6, dans lequel l'au moins un capteur électromagnétique et l'au moins un transmetteur électromagnétique comprennent ensemble un émetteur-récepteur (222).

9. Ensemble compartiment d'alimentation selon la revendication 1, dans lequel l'au moins un capteur électromagnétique comprend un premier capteur électromagnétique et un second capteur électromagnétique, dans lequel le premier capteur électromagnétique est positionné sur un côté opposé du cadre du second capteur électromagnétique.

10. Ensemble compartiment d'alimentation selon l'une quelconque de la revendication 1 à la revendication 5, comprenant en outre :
un cadre de lancement (208) adjacent à l'extrémité d'entrée du compartiment d'alimentation (202) et agencé pour pivoter autour d'un axe transversal (210) par rapport au compartiment d'alimentation (202) ; et
au moins un vérin hydraulique supplémentaire (212) configuré pour appliquer une force hydraulique supplémentaire pour faire tourner le cadre de lancement (208) autour de l'axe transversal (210).

11. Ensemble compartiment d'alimentation selon la revendication 10, dans lequel le cadre en lacet (214) est couplé au cadre de lancement (208) au niveau de l'axe vertical (216), et dans lequel le cadre de lancement (208) est couplé au compartiment d'alimentation (202) au niveau de l'axe transversal (210).

12. Procédé (600) de liaison d'un bec cueilleur de récolte (502) avec une moissonneuse agricole présentant un ensemble compartiment d'alimentation selon l'une quelconque des revendications 1 à 11, le procédé comprenant :
l'application (606) d'une première force hydraulique d'au moins un vérin hydraulique (220) à un cadre en lacet (214) adjacent à une extrémité d'entrée d'un compartiment d'alimentation (202), la première force hydraulique étant orientée pour faire pivoter le cadre en lacet (214) autour d'un axe vertical (216) ;
le déplacement (608) de la moissonneuse agricole vers le bec cueilleur de récolte (502) ;
la fixation (610) du bec cueilleur de récolte (502) au cadre en lacet (214) ; et
l'application (612) d'une seconde force hydraulique de l'au moins un vérin hydraulique (220) au cadre en lacet (214) pour orienter le bec cueilleur de récolte (502) à un angle droit par rapport à un axe longitudinal de la moissonneuse agricole.

13. Procédé selon la revendication 12, dans lequel l'application de la première force hydraulique et l'application de la seconde force hydraulique comprennent chacune la fourniture d'un fluide pressurisé à l'au moins un cylindre hydraulique (220).

14. Procédé selon la revendication 12, dans lequel la fixation du bec cueilleur de récolte (502) au cadre en lacet (214) comprend la fixation du bec cueilleur de récolte (502) au cadre en lacet (214) sans intervention de toute personne située à proximité d'un emplacement de couplage de celui-ci.

15. Procédé selon l'une quelconque de la revendication 12 à la revendication 14, comprenant en outre la direction d'un rayonnement électromagnétique depuis le cadre en lacet (214) vers le bec cueilleur de récolte (502) et la réception du rayonnement électromagnétique réfléchi du bec cueilleur de récolte (502) au niveau du cadre en lacet (214).

16. Moissonneuse agricole comprenant :
un châssis (104) ;
l'ensemble compartiment d'alimentation (200) selon l'une quelconque de la revendication 1 à la revendication 5 couplé au châssis (104) ;
un système de traitement (112) porté par le châssis (104) et structuré pour recevoir du matériau récolté de l'ensemble compartiment d'alimentation (200) ; et
une cellule à grain (114) portée par le châssis (104) et structurée pour recevoir du grain du système de traitement (112).

17. Support de stockage lisible par ordinateur non transitoire, le support de stockage lisible par ordinateur non transitoire (702) incluant des instructions qui, lorsqu'elles sont exécutées par un ordinateur, amènent l'ordinateur à réaliser le procédé selon l'une quelconque de la revendication 12 à la revendication 14.
